# EUROPEAN PATENT SPECIFICATION

(11) **EP 1 538 606 B1**
(45) Date of publication and mention of the grant of the patent: **29.06.2011**
(21) Application number: 04028885.4
(22) Date of filing: 06.12.2004
(51) Int. Cl.: G11B 5/55, G11B 5/02

(54) **Apparatus and method for adaptively controlling a read/write retry process in a data storage apparatus**
Vorrichtung und Verfahren zur adaptiven Kontrolle der Wiederholung eines Schreib-/Lese-Prozesses in einem Datenspeichergerät
Dispositif et procédé pour la commande adaptative d'un reprise de lecture/écriture dans un appareil de stockage de données

(30) Priority: 05.12.2003 KR 2003087942
(43) Date of publication of application: 08.06.2005
(73) Proprietor: SAMSUNG ELECTRONICS CO., LTD., Suwon-si, Gyeonggi-do (KR)
(72) Inventor: Yun, Sung-joong, Suwon-si Gyeonggi-do (KR)
(74) Representative: Grünecker, Kinkeldey, Stockmair & Schwanhäusser Anwaltssozietät

(56) References cited:
- EP-A- 1 014 355
- US-A- 5 721 816
- US-A- 6 141 168
- US-A1- 2002 118 480
- US-B1- 6 405 277
- US-B1- 6 512 647
- US-B1- 6 606 210

## Description

### CROSS-REFERENCE TO RELATED APPLICATIONS

This application claims the priority benefit of Korean Patent Application No. 2003-87942, filed on December 5, 2003, in the Korean Intellectual Property Office.

### BACKGROUND OF THE INVENTION

### 1. Field of the Invention

The present invention relates to a data storage apparatus, medium, and corresponding controlling method used for the data storage apparatus, and more particularly, to an apparatus, medium comprising computer readable code, and method for adaptively controlling a retry process in the data storage apparatus in order to independently execute the plurality of retry routines classified in accordance with ambient temperature of the data storage apparatus, for example, a disk drive.

### 2. Description of the Related Art

Korean Patent Laid-open No. 2000-182292 and Japanese Patent Laid-open No. Heisei 11-195211 set forth disk drive apparatuses in generally related fields.

Korean Patent Laid-open No. 2000-182292 describes a technique for increasing a success rate of a retry process in a disk drive by storing values of retry parameters obtained during a successful read retry process, as statistical information, and using the statistical information to update default values of the retry parameters. Japanese Patent Laid-open No. Heisei 11-195211 describes a technique for compensating for a degraded performance of a disk drive by sensing ambient temperature of the disk drive with an MR read sensor using the change in resistance in the sensor, and by using the sensed temperature.

In general, a hard disk drive, as a data storage apparatus, is used by a computer system to read or write data from or to a disk, using a head of the hard disk drive. As hard disk drives having higher capacity, higher density, and smaller size have been demanded, there has been a tendency to further increase a rotational density BPI (bit per inch) and a radial-directional density TPI (track per inch). Accordingly, a more accurate control mechanism is needed.

In addition, as hard disk drives are designed to have higher density and smaller size, characteristics, e.g., temperature, of mechanisms and circuits change, such that errors occur during data read or write operations. In order to remove these errors, retry processes are performed.

In a retry process, the data read or write operation is repeatedly performed for a predetermined number of times, while the values of various parameters associated with the data read and write operations can be highly sensitive to temperature.

According to these conventional techniques, the retry process is performed even while the values of the parameters change during a single retry routine, using the same retry table for all temperatures. Therefore, there may be a lower success rate with the conventional retry processes. Moreover, because of this lowered success rate the conventional retry process may fail to read or write data.

EP 10 14 355 A1, which is used for the two-part form delimitation, discloses an optical storing apparatus and recording and reproducing method of optical storage medium.

US 6,606,210 B1 discloses an intelligent sector recovery algorithm. US 2002/0118480 A1 discloses a method and apparatus for saving calibration parameters for a removable cartridge.

### SUMMARY OF THE INVENTION

The invention refers to the method of claim 1, to the data storage apparatus of claim 4 and to the medium of claim 9. Preferred embodiments are disclosed in the dependent claims.

Embodiments of the present invention provide an apparatus, medium, and method for adaptively controlling a retry process in a data storage apparatus by setting a plurality of retry routines in accordance with the temperature of the data storage apparatus and independently executing the plurality of retry routines corresponding to measured temperatures.

Additional aspects and/or advantages of the invention will be set forth in part in the description which follows and, in part, will be obvious from the description, or may be learned by practice of the invention.

To achieve the above and/or additional aspects and advantages, embodiments of the present invention include a method of adaptively controlling a retry process in a data storage apparatus, including measuring and updating a temperature of the data storage apparatus, determining whether the data storage apparatus has transitioned into a retry mode, selecting a retry routine corresponding to the updated temperature, out of a plurality of predetermined retry routines, when the system is determined to have transitioned into the retry mode, and resetting retry parameters in accordance with the selected retry routine and performing a data read or write operation.

In addition, the plurality of the retry routines may be classified in accordance with temperature, and the temperature-classified retry routines may be independently executed at corresponding temperatures. Further, the plurality of the retry routines may be classified to correspond to low, normal, and high temperatures.

To achieve the above and/or additional aspects and advantages, embodiments of the present invention include a data storage apparatus including a medium providing information about a plurality of temperature-classified retry tables and temperature, a temperature sensor to measure temperature of the data storage apparatus, a controller to control operations of updating the temperature information provided in the medium with information about the temperature measured by the temperature sensor, to select a retry table corresponding to an updated temperature information when the data storage apparatus is transitioned into a retry mode, and to execute independent retry routines in accordance with the selected retry table, and a read/write circuit to reset retry parameters in accordance with a routine executed by the controller and perform a data read or write operation by using the reset retry parameters.

Similarly, the plurality of the temperature-classified retry tables may be independently designed by using temperature-classified retry parameters, and the plurality of the temperature-classified retry tables include at least a table used to set independent retry parameters for low, normal, and high temperatures.

In addition, in the data storage apparatus, the medium may be a memory in the data storage apparatus.

To achieve the above and/or additional aspects and advantages, embodiments of the present invention include a read and/or write method, including reading and/or writing data from/to a medium, selecting a retry routine, out of a plurality of retry routines, based on a measured temperature for the medium, and resetting retry parameters in accordance with the selected routine and performing the reading and/or writing of data with the reset retry parameters when the reading and/or writing of data enters a retry mode.

To achieve the above and/or still additional aspects and advantages, embodiments of the present invention include a data storage apparatus including a medium providing information about a plurality of retry tables, a temperature sensor to measure temperature of the data storage apparatus, and a controller to select a retry table corresponding to the measured temperature when the data storage apparatus is transitioned into a retry mode, and to execute independent retry routines in accordance with the selected retry table.

To achieve the above and/or additional aspects and advantages, embodiments of the present invention include media comprising computer readable code implementing embodiments of the present invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates a plan view of a disk drive apparatus, using an adaptive retry control method, according to an embodiment of the present invention;
FIG. 2 is a block diagram illustrating an electrical system controlling a disk drive, according to an embodiment of the present invention;
FIG. 3 is a flowchart illustrating an adaptive retry control method, for a data storage apparatus, according to an embodiment of the present invention; and
FIGS. 4A, 4B and 4C illustrate examples of retry tables corresponding to low, normal, and high temperatures, respectively, according to another embodiment of the present invention.

### DETAILED DESCRIPTION OF THE PREFERRED EMBODIMENTS

Reference will now be made in detail to embodiments of the present invention, examples of which are illustrated in the accompanying drawings, wherein like reference numerals refer to the like elements throughout. The embodiments are described below to explain the present invention by referring to the figures.

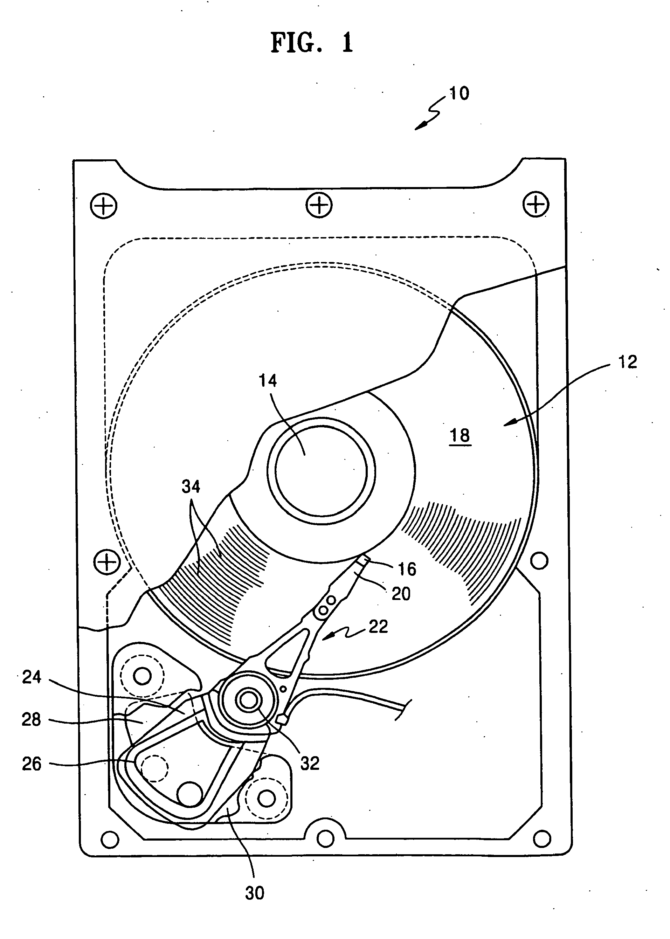

FIG. 1 illustrates a plan view of a data storage apparatus, that is, a disk drive 10, using an adaptive retry control method, according to an embodiment of the present invention. The disk drive 10 comprises a spindle motor 14 and at least one magnetic disk 12 rotated by the spindle motor 14. The disk drive 10 further comprises a transducer 16 disposed adjacent to a disk surface 18 of the magnetic disk 12.

The transducer 16 reads/writes information from/to the disk 12 by sensing magnetic fields of the disk 12 and magnetizing differing portions of the disk 12. Typically, the transducer is associated with the disk surface 18. Although a single transducer is described, it should be understood that the transducer may comprise a read transducer for sensing the magnetic fields of the disk 12 and a write transducer for magnetizing the differing portions of the disk 12. The read transducer is made of a magneto-resistive (MR) material, and is often referred to as a head.

The transducer 16 may be integrated into a slider 20. The slider 20 has a typical structure in which an air bearing is formed between the transducer 16 and the disk surface 18. The slider 20 is incorporated into a head gimbal assembly 22. The head gimbal assembly 22 is attached to an actuator arm 24 having a voice coil 26. The voice coil 26 is disposed adjacent to a magnetic assembly 28 to define a voice coil motor (VCM) 30. When a current is supplied the voice coil 26, the VCM 30 generates a torque for rotating the actuator arm 24 round a bearing assembly 32. Rotation of the actuator arm 24 will move the transducer 16 across the disk surface 18.

Typically, information is stored in annual tracks 34 on the disk 12. Each of the tracks 34 comprises a plurality of sectors. Each of the sectors comprises data fields and identification fields. The identification fields may include a grey code used to identify a sector and a track (cylinder). The transducer 16 move across the disk surface 18 in order to read or write information recorded in other tracks 34.

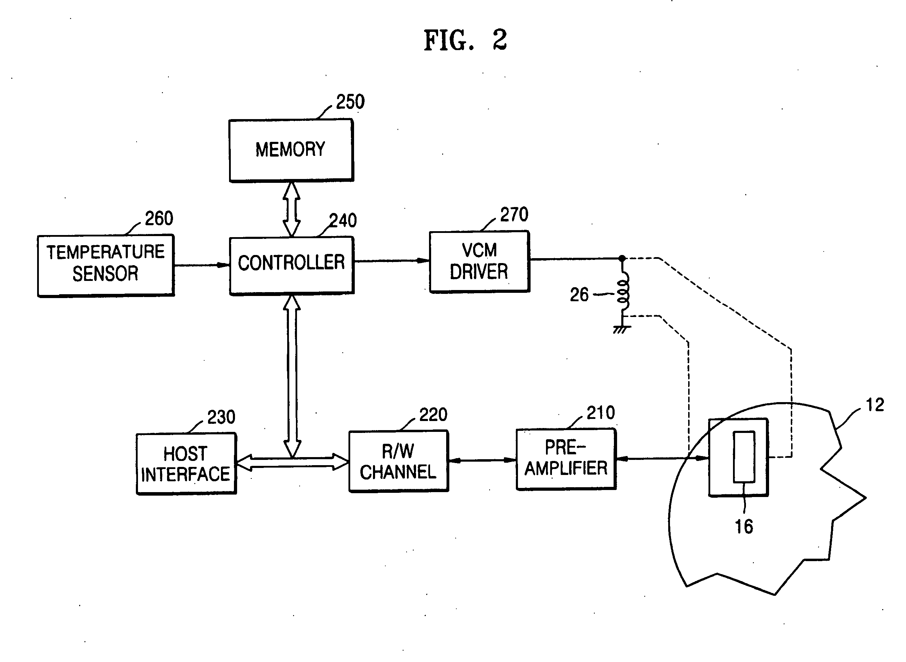

FIG. 2 is a block diagram illustrating an electrical system controlling a disk drive, according to an embodiment of the present invention.

As illustrated in FIG. 2, the disk drive 10 comprises a disk 12, a transducer 16, a pre-amplifier 210, a write/read channel 220, a host interface 230, a controller 240, a memory 250, a temperature sensor 260, and a VCM driver 270.

The pre-amplifier 210 and the write/read channel 220 are collectively referred to as a write/read circuit.

Various programs and data used to control the disk drive 10 can be stored in the memory 250. In embodiments of the present invention, the memory 250 may store information about a plurality of temperature-classified retry tables and corresponding temperatures. For example, the memory 250 may be a non-volatile memory.

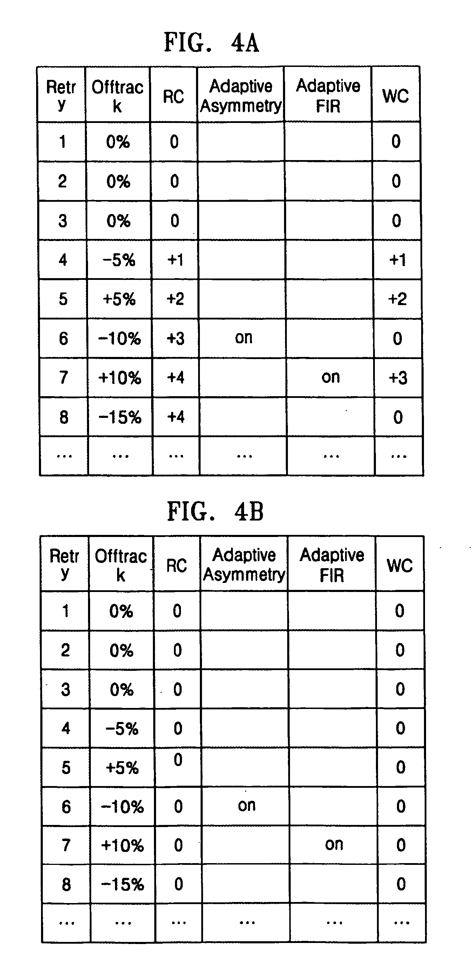

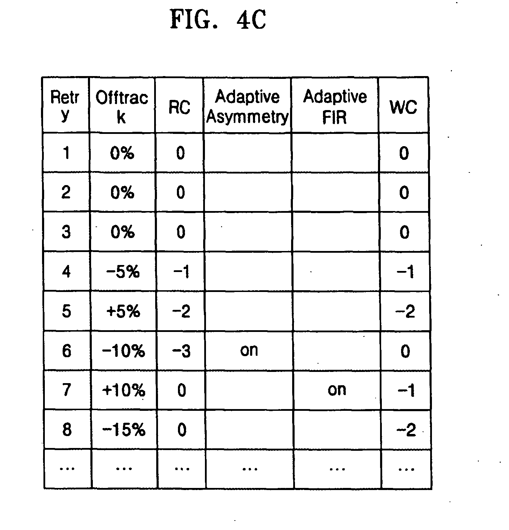

Examples of the temperature-classified retry tables are illustrated in FIGS. 4A, 4B and 4C. The retry tables of FIGS. 4A, 4B, and 4C can be interpreted as low, normal, and high temperature retry tables.

The low temperature retry table can be used to set retry parameters, so that the disk drive 10 can show optimal performance at a low temperature. In particular, the low temperature table can be used to increase a read bias current and improve a bit error rate in order to compensate for low temperature characteristics.

The normal temperature retry table can be used to set retry parameters, so that the disk drive 10 can show optimal performance at a normal temperature. In particular, the normal temperature table can be used to set the read bias current to a default value, selected by using a read channel optimizing (RCO) method.

The high temperature retry table can be used to set retry parameters, so that the disk drive 10 can show optimal performance at a high temperature. In particular, the high temperature table can be used to reduce the read bias current, in order to compensate for high temperature characteristics. Accordingly, by implementing embodiments of the present invention, it is possible to prolong the life time of the head of the disk drive 10.

Although three retry tables have been illustrated for use in embodiments of of the present invention, the retry tables may be further classified in accordance with more detailed temperatures or temperature ranges.

Now, operations of the general disk drive, according to the present invention, will be described.

In a read mode of the disk drive 10, the transducer 16, sometimes referred as a head, senses an electrical signal from the disk 12. The electrical signal is amplified by the pre-amplifier 210, so that the electrical signal can be easily processed. An amplified signal in an analog form is encoded into a digital signal by the write/read channel 220, so that the digital signal can be read by a host system (not shown). The digital signal is converted into a data stream. The data stream is then transmitted to the host system through the host interface 230.

In a write mode of the disk drive 10, data is received from the host system through the host interface 230 and temporarily stored in the buffer (not shown) of the host interface 230. The data stored in the buffer is sequentially output and converted into a binary data stream by the read/write channel 220. The data is written on the disk 12 by the transducer 16 using a write current amplified by the pre-amplifier 210.

The controller 240 is also coupled to the VCM driver 270 supplying a driving current to the voice coil 26. The controller 240 applies a control signal to the VCM driver 270 to control excitation of the VCM and movement of the transducer 16.

The controller 240 is also coupled to the memory 250, which may be a non-volatile memory device such as a flash memory device. Commands and data used by the controller 240 for executing software routines can be stored in memory 250. One of the software routines is a seek routine used to move the transducer 16 from one track to another track. The seek routine comprises a server control routine for ensuring an accurate track movement of the transducer 16.

In addition, the controller 240 periodically updates temperature information, stored in the memory 250, with information about the temperature measured by the temperature sensor 260. The controller 240 selects an appropriate retry table corresponding to the updated temperature information by using the information stored in the memory when the disk drive 10 is transitioned into a retry mode. The controller 240 then executes independent retry routines in accordance with the selected retry table.

More specifically, the controller 240 reads the temperature information stored in the memory 250 when the disk drive 10 is transitioned in the retry mode. Next, the controller 240 reads the information about the appropriate retry table corresponding to the read temperature information, out of the plurality of the retry tables. The controller 240 controls a resetting operation of resetting retry parameters associated with the data read or write performance, in accordance with the number of retry processes, by adapting the read retry table information. After that, the controller 240 repeatedly executes the data read or write operations.

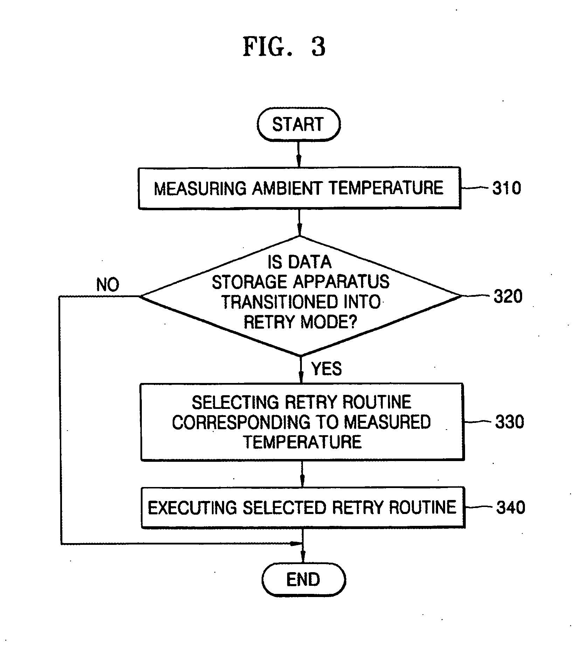

FIG. 3 is a flowchart illustrating an adaptive retry control method used for the disk drive 10, according to embodiments of the present invention.

Firstly, the controller 240 periodically updates the temperature for the disk drive 10, stored in the memory 250, with the measured temperature, using the temperature sensor 260 (S310).

Next, while the controller 240 executes the data read or write operation, in accordance with the command input by the host system (not shown), the controller 240 determines whether the disk drive should be transitioned into the retry mode, e.g., due to an error occurring during the data read or write operation (S320).

Next, when the disk drive 10 has been determined to have transitioned into the retry mode, as a result of the operation S320, the controller 240 selects a retry routine by retrieving an appropriate retry table corresponding to the currently updated temperature stored in the memory 250, out of the plurality of the retry tables stored in the memory 250 (S330).

Finally, while allowing the retry routine to sequentially change the retry parameters, by using the appropriately retrieved retry table corresponding to the measured temperature, the controller 240 repeatedly executes the data read or write operations in accordance with a number of retry processes (S340).

Thus, according to embodiments of the present invention, since a plurality of retry routines can be independently executed in accordance with a measured temperature of a disk drive, it is possible to increase the success rate of a retry process and improve reliability of a disk drive.

Embodiments of the present invention, including individual features of the embodiments, may be implemented as a method, medium comprising computer readable code, apparatus, system, etc. When implemented in computer readable code or software, elements of the present invention can essentially be code segments performing necessary tasks, e.g., implementing the flow chart illustrated in FIG. 3 or providing the temperature related retry tables. For example, the code segments or a program can be stored in a processor readable medium or transmitted as computer data signals, e.g., coupled to a carrier wave through a communication medium or network. The processor readable medium includes any medium that can store or transfer information. Examples of the processor readable medium include an electronic circuit, a semiconductor memory device, a ROM, a flash memory, an erasable ROM (EROM), a floppy diskette, a CD-ROM, an optical disk, a hard disk, an optical fiber medium, an RF network, the Intemet, etc. Examples of the computer data signals include any signals that can be transmitted through a transmission medium such as an electronic network channel, an optical fiber, air, an electromagnetic network, and an RF network.

While the present invention has been particularly shown and described with reference to exemplary embodiments thereof, it will be understood by those of ordinary skill in the art that various changes in form and details may be made therein. Therefore, it is apparent that the present invention can be adapted to various data storage apparatus as well as various disk drives such as a hard disk drive.

## Claims

1. A method of adaptively controlling a retry process of a read or write operation in a storage apparatus (10), the method comprising:
measuring and updating a temperature of the data storage apparatus (10);
determining whether the data storage apparatus (10) has transitioned into a retry mode;
the method **characterised in that**
when the data storage apparatus (10) is determined to have transitioned into a retry mode, a retry table corresponding to an updated temperature information is selected out of a plurality of temperature-classified retry tables,
independent retry routines in accordance with the selected retry table are executed;
and
retry parameters in accordance with an executed retry routine are reset and a data read or write operation is performed.

2. The method according to claim 1, further providing the updated temperature and/or plurality of temperature-classified retry tables from a medium.

3. The method according to claim 2, wherein the medium is a memory (250) in the data storage apparatus.

4. A data storage apparatus comprising:
a temperature sensor (260) to measure temperature of the data storage apparatus (10);
the data storage apparatus **characterised in that** it comprises
a medium (250) providing information about a plurality of temperature-classified retry tables and temperature;
a controller (240) to control operations of updating the temperature information provided in the medium (250) with information about the temperature measured by the temperature sensor (260), to select a retry table corresponding to an updated temperature information when the data storage apparatus (10) is transitioned into a retry mode, and to execute independent retry routines in accordance with the selected retry table, wherein the retry routines are for a read or write operation; and
a read/write circuit is provided to reset retry parameters in accordance with a routine executed by the controller and perform a data read or write operation by using the reset retry parameters.

5. The data storage apparatus according to claim 4, wherein the plurality of the temperature-classified retry tables are independently designed by using temperature-classified retry parameters.

6. The data storage apparatus according to any of claims 4 or 5, wherein the plurality of the temperature-classified retry tables include at least a table used to set independent retry parameters for low, normal, and high temperatures.

7. The data storage apparatus according to any of claims 4 to 6, wherein the operation of updating the temperature information with information about the temperature measured by the temperature sensor (260) is periodically performed under the control of the controller (240).

8. The data storage apparatus according to any of claims 4 to 7, wherein the medium (250) is a memory (250) in the data storage apparatus.

9. A medium comprising computer readable code for controlling a data storage apparatus to perform the method of claim 1.

## Patentansprüche

1. Verfahren zum adaptiven Steuern eines Prozesses zum Wiederholen eines Lese- oder Schreibvorgangs in einer Speichervorrichtung (10), wobei das Verfahren umfasst:
Messen und Aktualisieren einer Temperatur der Datenspeichervorrichtung (10);
Feststellen, ob die Datenspeichervorrichtung (10) in einen Wiederhol-Modus übergegangen ist;
wobei das Verfahren **dadurch gekennzeichnet ist, dass**:
wenn festgestellt wird, dass die Datenspeichervorrichtung (10) in einen Wiederhol-Modus übergegangen ist, eine zu einer aktualisierten Temperatur-Information gehörige Wiederhol-Tabelle, aus einer Vielzahl nach Temperatur klassifizierter Wiederhol-Tabellen ausgewählt wird,
unabhängige Wiederhol-Routinen entsprechend der ausgewählten Wiederhol-Tabelle ausgeführt werden; und
Wiederhol-Parameter entsprechend einer ausgeführten Wiederhol-Routine zurückgesetzt werden und ein Vorgang zum Lesen oder Schreiben von Daten durchgeführt wird.

2. Verfahren nach Anspruch 1, mit dem des Weiteren die aktualisierte Temperatur und/oder die Vielzahl nach Temperatur klassifizierter Wiederhol-Tabellen von einem Medium bereitgestellt werden/wird.

3. Verfahren nach Anspruch 2, wobei das Medium ein Speicher (250) in der Datenspeichervorrichtung ist.

4. Datenspeichervorrichtung, die umfasst:
einen Temperatursensor (260) zum Messen von Temperatur der Datenspeichervorrichtung (10);
wobei die Datenspeichervorrichtung **dadurch gekennzeichnet ist, dass** sie umfasst:
ein Medium (250), das Informationen über eine Vielzahl nach Temperatur klassifizierter Wiederhol-Tabellen und Temperatur bereitstellt;
eine Steuereinrichtung (240), die Vorgänge des Aktualisierens einer in dem Medium (250 vorhandenen Temperatur-Information mit einer Information über die von dem Temperatur-sensor (260) gemessene Temperatur steuert, eine zu einer aktualisierten Temperatur-Information gehörige Wiederhol-Tabelle auswählt, wenn die Datenspeichervorrichtung (10) in einen Wiederhol-Modus versetzt wird, und unabhängige Wiederhol-Routinen entsprechend der ausgewählten Wiederhol-Tabelle ausführt, wobei die Wiederhol-Routinen für einen Lese- oder Schreibvorgang bestimmt sind; und
eine Lese-Schreib-Schaltung vorhanden ist, um Wiederhol-Parameter entsprechend einer durch die Steuereinrichtung ausgeführten Routine zurückzusetzen und einen Vorgang zum Lesen oder Schreiben von Daten unter Verwendung der zurückgesetzten Wiederhol-Parameter durchzuführen.

5. Datenspeichervorrichtung nach Anspruch 4, wobei die Vielzahl der nach Temperatur klassifizierten Wiederhol-Tabellen unabhängig unter Verwendung nach Temperatur klassifizierter Wiederhol-Parameter angelegt sind.

6. Datenspeichervorrichtung nach einem der Ansprüche 4 oder 5, wobei die Vielzahl der nach Temperatur klassifizierten Wiederhol-Tabellen wenigstens eine Tabelle enthalten, die dazu dient, unabhängige Wiederhol-Parameter für niedrige, normale und hohe Temperaturen festzulegen.

7. Datenspeichervorrichtung nach einem der Ansprüche 4 bis 6, wobei der Vorgang des Aktualisierens der Temperatur-Information mit einer Information über die von dem Temperatursensor (260) gemessene Temperatur periodisch von der Steuereinrichtung (240) gesteuert durchgeführt wird.

8. Datenspeichervorrichtung nach einem der Ansprüche 4 bis 7, wobei das Medium (250) ein Speicher (250) in der Datenspeichervorrichtung ist.

9. Medium, das computerlesbaren Code umfasst, mit dem eine Datenspeichervorrichtung so gesteuert wird, dass sie das Verfahren nach Anspruch 1 durchführt.

## Revendications

1. Procédé de commande adaptative d'un processus de reprise d'une opération de lecture ou d'écriture dans un dispositif de stockage (10), le procédé comprenant :
la mesure et la mise à jour de la température du dispositif de stockage de données (10) ;
la détermination du fait que le dispositif de stockage de données (10) a effectué une transition dans un mode de reprise ;
le procédé étant **caractérisé en ce que**
lorsqu'on a déterminé que le dispositif de stockage de données (10) a effectué une transition dans un mode de reprise, une table de reprise correspondant aux informations de température mises à jour est sélectionnée dans une pluralité de tables de reprises classées par température,
des sous-programmes de reprise indépendants fonction de la table de reprise sélectionnée sont exécutés ; et
des paramètres de reprise fonction du sous-programme de reprise exécuté sont réinitialisés et une opération de lecture ou d'écriture de données est effectuée.

2. Procédé selon la revendication 1, fournissant en outre la température mise à jour et/ou une pluralité de tables de reprises classées par température, à partir d'un support.

3. Procédé selon la revendication 2, dans lequel le support est une mémoire (250) située dans le dispositif de stockage de données.

4. Dispositif de stockage de données comprenant :
un capteur de température (260) pour mesurer la température du dispositif de stockage de données (10) ;
le dispositif de stockage de données étant **caractérisé en ce qu'**il comprend
un support (250) fournissant des informations concernant une pluralité de tables de reprises classées par température, ainsi que la température ;
un contrôleur (240) pour commander les opérations de mise à jour des informations de température fournies dans le support (250) avec des informations concernant la température mesurée par le capteur de température (260), pour sélectionner une table de reprise correspondant à une information de température mise à jour lorsque le dispositif de stockage de données (10) effectue une transition dans un mode de reprise et pour exécuter des sous-programmes de reprise indépendants en fonction de la table de reprise sélectionnée, dans lequel les sous-programmes de reprise sont destinés à une opération de lecture ou d'écriture ; et
un circuit de lecture/écriture est prévu pour réinitialiser les paramètres de reprise en fonction d'un sous-programme exécuté par le contrôleur et pour effectuer une opération de lecture ou d'écriture de données en utilisant les paramètres de reprise réinitialisés.

5. Dispositif de stockage de données selon la revendication 4, dans lequel la pluralité de tables de reprises classées par température sont conçues de manière indépendante en utilisant des paramètres de reprise classés par température.

6. Dispositif de stockage de données selon l'une quelconque des revendications 4 ou 5, dans lequel la pluralité de tables de reprises classées par température comportent au moins une table utilisée pour déterminer des paramètres de reprises indépendants pour des températures basses, normales et hautes.

7. Dispositif de stockage de données selon l'une quelconque des revendications 4 à 6, dans lequel l'opération de mise à jour des informations de température avec des informations concernant la température mesurée par le capteur de température (260) est exécutée périodiquement sous le contrôle du contrôleur (240).

8. Dispositif de stockage de données selon l'une quelconque des revendications 4 à 7, dans lequel le support (250) est une mémoire (250) située dans le dispositif de stockage de données.

9. Support comprenant un code lisible par un ordinateur pour commander un dispositif de stockage de données pour exécuter le procédé selon la revendication 1.
